Europäisches Patentamt

European Patent Office

Office européen des brevets

(19)

(11) Veröffentlichungsnummer: **0 370 134 B1**

# EUROPÄISCHE PATENTSCHRIFT

(12)

(45) Veröffentlichungstag der Patentschrift: **16.09.92**

(51) Int. Cl.⁵: **F16L 11/11**

(21) Anmeldenummer: **88119627.3**

(22) Anmeldetag: **25.11.88**

(54) **Sanitärschlauch aus Kunststoff.**

(43) Veröffentlichungstag der Anmeldung:
**30.05.90 Patentblatt 90/22**

(45) Bekanntmachung des Hinweises auf die
Patenterteilung:
**16.09.92 Patentblatt 92/38**

(84) Benannte Vertragsstaaten:
**AT BE CH DE FR GB IT LI NL**

(56) Entgegenhaltungen:
**DE-A- 2 127 889**
**DE-A- 3 025 707**
**DE-A- 3 208 894**
**GB-A- 1 400 003**

(73) Patentinhaber: **DRESDNER BANK AG Filiale**
**Gelsenkirchen**
**Grasreinerstrasse 1-3 Postfach 100654**
**W-4650 Gelsenkirchen(DE)**

(72) Erfinder: **Börgel, Helmut**
**Hülsbergstrasse 253**
**W-4370 Marl/Westf.(DE)**

(74) Vertreter: **Herrmann-Trentepohl, Werner,**
**Dipl.-Ing. et al**
**Schaeferstrasse 18**
**W-4690 Herne 1(DE)**

# Beschreibung

Die Erfindung betrifft einen Sanitärschlauch aus Kunststoff gemäß dem Oberbegriff des Patentanspruches 1. Insbesondere bezieht sich die Erfindung auf Brauseschläuche, welche eine Handbrause mit einer Badezimmerarmatur verbinden und zu diesem Zweck eine Anschlußarmatur, vorzugsweise an beiden Schlauchenden tragen, die z.B. aus einem Nippel, einer Außenhülse und einer Überwurfmutter besteht.

Der erfindungsgemäße Sanitärschlauch ist einerseits biegsam, ohne abzuknicken, so daß der freie Strömungsquerschnitt auch bei Krümmungen des Schlauches erhalten bleibt. Er ist in Längsrichtung zugfest so bewehrt, daß er im Betrieb nicht platzt und austretendes Wasser zu Gefahren oder Unfällen führt, die insbesondere durch Verbrühungen von badenden Personen mit heißem Brausewasser auftreten können. Der erfindungsgemäße Sanitärschlauch aus Kunststoff ersetzt Metallschläuche dieser Art. Er weist diesen gegenüber eine Reihe von Vorteilen auf, nämlich u.a. ein geringes Gewicht, größere Haltbarkeit und niedrigere Außentemperaturen bei heißem Wasser. Obwohl zunehmend Sanitärschläuche aus Kunststoffen verlangt werden, können die erfindungsgemäßen Schläuche auch ein metallisches Aussehen erhalten, indem man das Querband mindestens einseitig mit einer Metallaufdampfung versieht, die vorzugsweise aus Chrom oder Aluminium besteht.

Der erfindungsgemäße Sanitärschlauch hat in der Regel einen relativ weichen Innenschlauch, der jedoch infolge seiner Längsbewehrung mit Kunststofffäden die erforderliche Zugfestigkeit aufweist. Das Querband läßt sich infolge seiner Verklebung mit dem Innenschlauch auf diesem nicht verschieben, so daß sich überall gleiche Abstände zwischen den Gängen des Querbandes ausbilden. Das Querband dient dadurch einerseits dazu, daß der fertige Schlauch den geforderten Platzdruck aushält und gewährleistet darüberhinaus zwischen den Gängen wendelförmige Hohlräume zwischen dem Innenschlauch und dem ebenfalls aus relativ weichem Material bestehenden Außenschlauch. Diese Hohlräume ermöglichen die geforderten Knickungen ohne Verlust des inneren Strömungsquerschnittes, indem die Wellentäler Falten bilden, die als Materialreserve in der Außenkrümmung Verwendung finden, während die Hohlräume den Materialüberschuß an der Innenkrümmung aufnehmen.

Derartige Sanitärschläuche müssen einerseits bestimmte Abmessungen einhalten. Diese ergeben sich aus den Armaturen, welche auf den Außen- und den Innenschlauch abgestimmt sind. Gewöhnlich sind in Europa beispielsweise Schläuche mit den Innen/ Außendurchmessern 9 x 14 oder auch 9 x 15 mm, also in relativ engen Grenzen vorgegeben. Andererseits müssen diese Schläuche eine bestimmte Druckfestigkeit gegen Platzen garantieren. Sie wird im allgemeinen bei 20 Grad C festgestellt und liegt bei 30 bar Platzdruck.

Inzwischen sind jedoch die von den Sanitärschläuchen aufzunehmenden Innendrücke wesentlich höher geworden. Das liegt u.a. an den zunehmenden Drücken der Kalt- und Warmwasserversorgung, die ihrerseits häufig eine Folge der mit wachsender Stockwerkzahl zunehmenden Gebäudehöhe sind. Das führt dazu, daß die garantierten Druckwerke der bekannten Sanitärschläuche erreicht und überschritten werden, so daß die Sicherheit nicht mehr gewährleistet ist. Andererseits ändern sich die geforderten Hauptabmessungen der Sanitärschläuche nicht bzw. wachsen die zwischen Innen- und Außendurchmesser unterzubringenden Materialstärken bei vergrößerten Innen- und Außendurchmessern nicht oder nicht entscheidend, obwohl die Drücke zunehmen.

Derartige Sanitärschläuche sind bereits bekannt.

Gemäß DE-A-30 25 707 ist es bekannt, ein Querband aus Hart-PVC mit einer einseitig metallisierten Polyesterfolie zwischen Innen- und Außenschlauch wendelförmig anzuordnen. Diese Bewehrung ist für die herkömmlichen Drücke geeignet und ermöglicht zudem die Darstellung einer metallisierten Oberfläche. Für die inzwischen wesentlich höheren Anforderungen an die aufzunehmenden Innendrücke ist die Bewehrung nicht ausreichend. Die DE-A-32 08 894, die als nächstkommender Stand der Technik angesehen wird, schlägt vor, zwischen Innen- und Außenschlauch wenigstens einen Verstärkungsdraht einzulegen, welcher, um Beschädigungen der Schläuche zu vermeiden, in PVC eingebettet wird. Dieses PVC mit Verstärkungsdraht wird wendelförmig um den Innenschlauch gelegt und an diesem festgeklebt. Die Verwendung mehrerer Verstärkungsdrähte wird angedeutet, eine optische Wirkung ist nicht vorgesehen. Durch ungünstige Anordnung von Verstärkungsdrähten wird eine Berücksichtigung der geforderten Abmessungen nicht gewährleistet. Weiterhin wird nicht gewährleistet, daß der Außenschlauch gegenüber dem nicht mit ebener Oberfläche versehenen Querband fixiert ist, so daß es zu einer in bekannter Weise unerwünschten schnellen Aufreibung des Außenschlauches und einer unansehnlichen und vor allem die Druckfestigkeit des Innenschlauches stark beeinträchtigenden Ablösung des wendelförmigen Querbandes kommen kann.

Der Erfindung liegt die Aufgabe zugrunde, einen Sanitärschlauch des eingangs bezeichneten allgemeinen Aufbaus zu schaffen, welcher bei Einhaltung der geforderten Abmessungen wesentlich erhöhte Innendrücke garantiert, wobei die Darstellung farbiger oder metallisierter Oberflächen ermöglicht wird.

Diese Aufgabe wird erfindungsgemäß mit den Merkmalen des Patentanspruches 1 gelöst. Weitere Merkmale der Erfindung sind Gegenstand der Unteransprüche.

Gemäß der Erfindung wird die Bewehrung verstärkt, ohne daß das Querband dicker werden muß bzw. ohne daß seine Dicke mehr als unwesentlich zunimmt. Das gelingt durch die von dem Material des Querbandes umspritzten Fäden geringer Dicke, welche mit dem Kunststoff des Querbandes unlösbar verbunden sind, jedoch aus hochfesten Kunststoffen bestehen. Diese Fäden besitzen eine praktisch vernachlässigbare Dehnung in Längsrichtung bei den infragekommenden Belastungen. Das nutzt die Erfindung aus, indem sie in bekannter Weise eine Vielzahl solcher bandkantenparalleler und damit auch unter sich paralleler, hochfester Fäden in dem verfügbaren Querschnitt des Querbandes in vorgegebener Zahl und Dicke unterbringt und dadurch erreicht, daß alle Fäden gleichmäßig tragen, sobald sich im Innenschlauch der Innendruck aufbaut. Die sich dann einstellenden Schnürspannungen des Querbandes werden mit den Fäden abgetragen, so daß sich praktisch keine radiale Dehnung ergibt, obwohl das PVC-Material, aus dem das Querband besteht, seinerseits unter Zugbelastung dehnbar ist. Die Fäden können ihrerseits aus parallelen gesponnenen Fasern bestehen und nehmen wesentlich höhere Zugspannungen auf als die Polyesterfolie. Infolge der bei Fäden größeren Haftflächen von Faden und PVC-Material ergibt sich eine erhebliche Steigerung der Zugfestigkeit. Das Ergebnis ist ein in seinen Hauptabmessungen im wesentlichen unveränderter Sanitärschlauch, der eine Druckerhöhung der bisherigen Werte auf etwa das Zehnfache, also bei Schläuchen mit den Abmessungen 9 x 14 mm auf 50 bar und bei Abmessungen von 9 x 15 mm bzw. 12 x 17 mm auf ca. 60 bar ermöglicht.

Die Erfindung hat den Vorteil, daß man das PVC-Material des Querbandes farbig gestalten kann, wodurch sich der neue Sanitärschlauch mit einer beliebigen Farbgebung versehen läßt.

Weiterhin wird zur zusätzlichen Bewehrung bei dem erfindungsgemäßen Sanitärschlauch eine Polyesterfolieneinlage mit mindestens einseitiger Metallbedampfungsschicht und einer Umspritzung aus hart eingestelltem Weich-PVC verwendet, um auf diese Weise einen Schlauch mit metallischem Aussehen zuerhalten.

Die Bewehrung wird so angebracht, daß die Metallbeschichtung des Bandes sichtbar bleibt. Andererseits wird die mangelnde Haftung der Polyesterfolieneinlage, die durch die meist nicht zu vermeidende, doppelseitige Metallbedampfungsschicht hervorgerufen wird, ausgeglichen, weil auch bei dieser Ausführungsform die hochfesten Fäden vollständig mit dem Kunststoff des Querbandes umhüllt sind.

Insbesondere werden die geforderten Abmessungen eingehalten, wie sie bei den üblichen Sanitärschläuchen 9 x 14 vorliegen, da der Durchmesser der acht Bewehrungsfäden mit 1.100 dtex die Gesamtabmessungen des Schlauches praktisch konstant läßt.

Da unter den höchsten der anzunehmenden Innendrücke, denen der Sanitärschlauch aus Kunststoff gemäß der Erfindung gewachsen ist, nicht mit einer Dehnung des Querbandes zu rechnen ist, sieht die Erfindung vor, das Querband außerdem mit dem Außenschlauch fest zu verbinden, wodurch die wendelförmigen Hohlräume unter den Wellentälern auch bei diesen Drücken erhalten bleiben und ihre eingangs beschriebene Funktion erfüllen können. Das gelingt mit den Merkmalen des Patentanspruches 2.

Im praktischen Betrieb ist es zweckmäßig, die Bewehrungsfäden zunächst zu umspritzen und damit das Querband für sich herzustellen, das nach seiner Abkühlung mit den erforderlichen Klebeschichten versehen wird. Bei dieser Herstellung gewinnt man ein Ausgangsmaterial mit den im Anspruch 3 gekennzeichneten Merkmalen. Das Querband kann dann in Form einer Spule in den Extruder eingebracht werden, welcher den vorher mit Längsfäden verstärkten Innenschlauch umspritzt. Die Herstellung des Querbandes als Vorprodukt ermöglicht den Ausgleich der unterschiedlichen Herstellungsgeschwindigkeiten von Querband einerseits und Sanitärschlauch andererseits, ohne daß die Qualität des so hergestellten Sanitärschlauches Schaden erleidet.

Die Erfindung wird im folgenden anhand ihrer Hauptausführungsbeispiele näher erläutert, die in den Figuren der Zeichnung wiedergegeben sind. Es zeigen

Fig. 1     eine erste Ausführungsform des erfindungsgemäßen Sanitärschlauches im Längsschnitt, der an der Schlauchmitte abgebrochen ist,

Fig. 2     einen Schnitt längs der Linie II-II der Fig. 1, und

Fig. 3     eine abgeänderte Ausführungsform des Querbandes gegenüber der Darstellung in den Fig. 1 und 2 im Querschnitt.

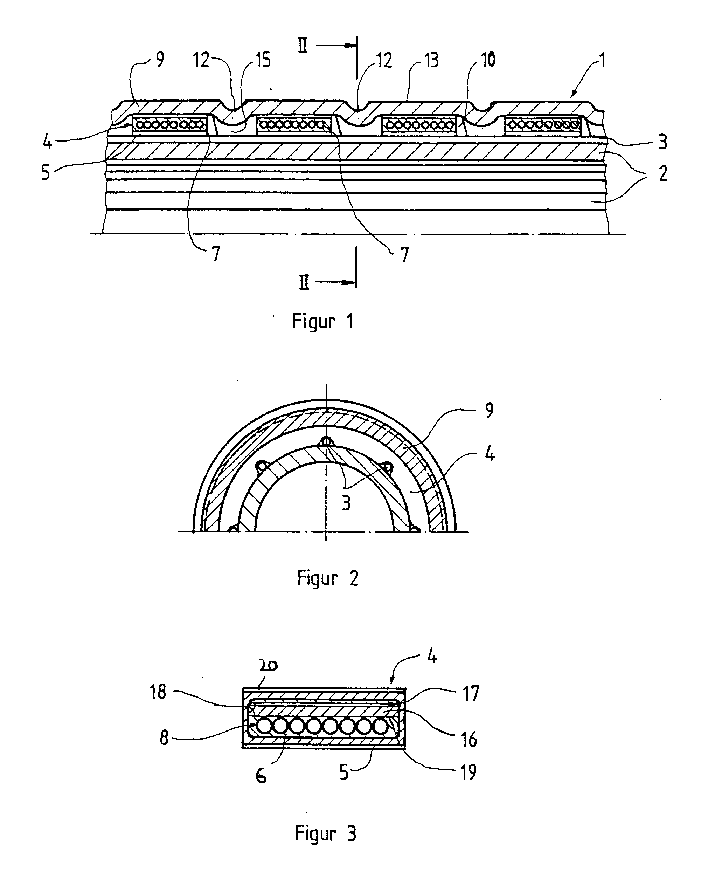

Bei dem in Fig. 1 allgemein mit (1) bezeichneten Schlauch handelt es sich um einen Brauseschlauch für den eingangs bezeichneten Zweck. Der Schlauch besteht vollständig aus Kunststoff. Er weist einen extrudierten Innenschlauch (2) auf, welcher außen mit einer Mehrzahl von Längsfäden (3) verstärkt ist. Die Längsfäden bestehen gewöhnlich aus einem festen Werkstoff, können aber im Gegensatz zu den übrigen Materialien auch aus Glas bzw. Mineralien bestehen. Bei den üblichen Abmessungen der Schläuche genügen im allgemeinen acht Längsfäden, die gleichmäßig über den Umfang des Innenschlauches (2) verteilt angeordnet sind, was sich aus Fig. 2 ergibt.

Der Sanitärschlauch (1) enthält ferner ein Querband (4), welches gemäß der Darstellung der Fig. 1 wendelförmig angeordnet ist und auf seiner Innenseite eine Kleberbeschichtung (5) aufweist, welche jede Wendel des Querbandes (4), d.h. das Querband (4) auf seiner gesamten Länge mit dem Innenschlauch bzw. an den Fäden (3) mit diesen verklebt. Die Einzelheiten des Querbandes (4) sind aus der Darstellung der Fig. 3 ersichtlich. Danach besteht das Querband zur Hauptsache aus hart eingestelltem Weich-PVC (6) und weist eine innenliegende Bewehrung (7) auf. Diese besteht aus einer Vielzahl von längskantenparallelen, hochfesten Fäden, von denen einer mit (8) bezeichnet ist. Die Fäden liegen im geringen gegenseitigen Abstand voneinander und sind parallel angeordnet. Dadurch umhüllt der Kunststoff (6) des Querbandes (4) alle Fäden auf ihrem gesamten Umfang. Da die Fäden aus Kunststoffmaterial (6) bestehen, beispielsweise aus Polyester oder aus Keflar, ergeben sich an den ausgedehnten Haftflächen erhebliche Haftkräfte, die verhindern, daß sich das Kunststoffmaterial (6) gegenüber den Fäden wesentlich dehnen kann. Die Fäden selbst nehmen die aus den Schnürspannungen bei wachsenden Innendrücken im Schlauch (2) auftretenden Zugbelastungen auf, denen sie ohne wesentliche Dehnung gewachsen sind.

Gemäß der Erfindung sind acht Bewehrungsfäden mit ca. 1.100 dtex als Bewehrung vorgesehen und vollständig mit dem Kunststoffmaterial (6) umhüllt. Das Querband hat eine Dicke von ca. 3,6 mm und eine Breite von ca. 12 mm. Ein solcher Schlauch garantiert eine Festigkeit bis zu 60 bar.

Der Sanitärschlauch (1) weist einen Außenschlauch (9) auf, welcher zwischen den Gängen (10) der Querbandwendel Wellentäler (12) ausbildet, während die flachen Wellenkämme (13) über den Querbandwendeln (10) liegen. Die Wellentäler (12) bilden Falten, unter denen sich Hohlräume (15) befinden, deren Funktion eingangs erklärt worden ist.

Nach Fig. 3 besteht die Bewehrung außer aus den Längsfäden (8) aus einer Polyesterfolienanlage (16), welche eine außenliegende Metallbedampfung (17) aufweist. Üblicherweise ist allerdings die Metallbedampfung (17) nicht nur auf einer, sondern auf allen Seiten, wie bei (18) angedeutet, vorhanden. Sie verbindet sich nicht oder nur ungenügend mit dem Hart-PVC-Material (6) des Querbandes.

Das Querband ist allseitig, d.h. auch auf der der Seite (5) gegenüberliegenden Seite (20) mit einer Klebstoffschicht versehen. Infolgedessen ergibt sich auch eine Verklebung mit dem Außenschlauch (9). Die hochfesten Fäden sind in einer gemeinsamen Querebene und parallel zueinander angeordnet und bestehen einheitlich aus dem Polyester- oder Keflarkunststoff. Die gemeinsame Querebene verläuft parallel und unter der Polyesterfolie.

Das Querband (4) wird bei der Herstellung des Sanitärschlauches (1) zunächst als Vorprodukt gefertigt. Die Fäden (8) laufen dazu in das Gesenk eines Extruders ein, der das hart eingestellte Weich-PVC des Querbandmateriales (6) aufbringt und dabei die Umhüllung der Fäden (8) bewerkstelligt. Aus dem Gesenk läuft das heiße Querband zunächst in ein Wasserbad und gelangt dann von einer Antriebsstation ausgehend in eine Kleberbenetzungseinrichtung, welche die allseitige Umhüllung des Querbandes mit dem flüssigen Kleber herbeiführt. Hinter dieser Einrichtung durchläuft das Querband eine Strahlungsheizung, welche den flüssigen Kleber trocknet. Deswegen kann das Querband im Anschluß daran aufgehaspelt werden.

Nach Fig. 3 werden die Polyesterfolie, welche vorher mit ihrer Metallbedampfung versehen ist, ebenso wie die Längsfäden (8) von einer Rolle abgezogen und gelangt mit diesen in das Extrudergesenk.

Das so gewonnene Vormaterial befindet sich auf Spulen, welche in den Herstellungsprozeß des Sanitärschlauches (1) eingesetzt werden.

Dieser beginnt mit einem Extruder, dem in einem Gesenk die Längsfäden (3) zugeführt werden, aus dem der Innenschlauch (2) austritt. Der Innenschlauch besteht aus relativ weichem PVC-Material und ist außen glatt. Er tritt unmittelbar in ein zweites Extrudergesenk ein, in welches das Vormaterial, d.h. das fertige Querband (4) eingeführt wird. Aus diesem Gesenk wird der Außenschlauch (1) extrudiert und gleichzeitig, wie bei (12) dargestellt, eingefaltet. Damit die Hohlräume (15) offen bleiben, wird Preßluft zugeführt, die verhindert, daß sich das Material des Außenschlauches (9) im Faltenbereich mit dem Innenschlauch (2) verbindet. Während des Extrudiervorganges wird die Kleberbeschichtung aktiviert, so daß sich eine feste Verbindung des Querbandes (4) mit dem Innen- und dem Außenschlauch (2 bzw. 9) ergibt.

Das Material des Querbandes läßt sich einfärben. Ist der Außenschlauch (9) transparent, so tritt die Einfärbung des Querbandes nach außen in Erscheinung. Auf diese Weise lassen sich beliebige Farbgebungen verwirklichen, sofern nicht eine Metallbeschichtung (18) sichtbar gemacht werden soll.

**Patentansprüche**

1. Sanitärschlauch aus Kunststoff (1), insbesondere Brauseschlauch, bestehend aus einem extrudierten und mit Längsfäden (3) verstärkten Innenschlauch (2), einem Querband (4) aus PVC, das wendelformig mit dem Innenschlauch (2) verklebt ist und eine innenliegende Bewehrung (7), bestehend aus einer Vielzahl von längskantenparallelen, hochfesten Fäden (8) aufweist, welche Fäden in geringem Abstand zueinander in einer Querebene angeordnet und mit dem Kunststoff des Querbandes (4) umspritzt sind, sowie einem Außenschlauch (9), der zwischen den Gängen (10) der Querbandwendel Wellentäler (12) bildet unter denen sich Hohlräume (15) befinden, dadurch gekennzeichnet, daß das Querband aus hart eingestelltem Weich-PVC besteht, daß die Bewehrung (7) des Querbandes (4) zusätzlich zu der Vielzahl von längskantenparallelen, hochfesten Fäden (8) aus einer Polyesterfolieneinlage (16) mit einseitiger Metallbedampfungsschicht (17) und einer Umspritzung aus hart eingestelltem Weich-PVC besteht, und daß bei einer Querbanddicke von ca. 3,6 mm und einer Querbandbreite von ca 12 mm acht Bewehrungsfäden mit ca. 1.100 dtex vorgesehen sind.

2. Sanitärschlauch nach Anspruch 1, dadurch gekennzeichnet, daß das Querband (4) mit dem Außenschlauch verklebt ist.

3. Sanitärschlauch nach einem der vorhergehenden Ansprüche, dadurch gekennzeichnet, daß das Querband (4) nach dem Umspritzen der Bewehrungsfäden (8) und nach Abkühlung mit dem Kleber (5, 20) benetzt und danach aufgeheizt, sowie nach dem Trocknen des Klebers 85, 20) aufgewickelt und beim Aufbringen des Außenschlauches (9) im Extruder befestigt ist.

## Claims

1. A sanitary plastic hose (1), particularly a sprayhose, comprising an extruded inner hose (2) which is strengthened by longitudinal fibres (3), a cross-band (4) made of PVC, which is cemented to the inner hose (2) in the form of a helix, and an internal reinforcement (7) comprising a number of high strength fibres (8) with edges extending longitudinally parallel, said fibres being arranged at a short distance from one another in a transverse plane and being spray-coated by the plastics material of the cross-band (4), and an external hose (9) which forms undulating troughs between the pitches (10) of the cross-band helix, under which troughs hollow spaces (15) are located, characterised in that the cross-band comprises rigidly fixed soft PVC, that the reinforcement (7) of the cross-band (4) comprises a polyester film insert (16) with a unilateral metal damping layer (17) and a spray-coating of rigidly fixed soft-PVC in addition to the number of high strength fibres (8) with edges extending longitudinally parallel, and that eight reinforcement fibres are provided with approximately 1.100 dtex for a cross-band thickness of approximately 3.6 mm and a cross-band width of approximately 12 mm.

2. A sanitary plastic hose according to Claim 1, characterised in that the cross-band (4) is cemented to the external hose.

3. A sanitary plastic hose according to any one of the previous claims, characterised in that the cross-band (4) is sprinkled with cement (5, 20) and then heated after the spray-coating of the reinforcement fibres (8) and after cooling, and is coiled after drying of the cement (85, 20) and fixed during the application of the external hose (9) in the extruder.

## Revendications

1. Tuyau souple (1) en matière plastique pour usage sanitaire, en particulier tuyau de douche, comportant un tuyau interne (2) réalisé par extrusion et renforcé par des fils longitudinaux (3), une bande transversale (4) en PVC, disposée en spires et fixée par collage au tuyau interne (2), cette bande transversale (4) étant constituée par un grand nombre de fils (8) à haute résistance, parallèles à ses bords longitudinaux, ces fils étant disposés suivant un faible intervalle entre eux dans un plan transversal et enrobés par injection dans la matière plastique de la bande transversale (4), le tuyau souple (1) comportant également une gaîne externe (9) qui forme entre les spires (10) de la bande transversale (4) des gorges ondulées en creux (12) sous lesquelles existent des espaces vides (15), caractérisé en ce que la bande transversale est constituée de PVC de nuance molle durci par le traitement, en ce que l'armature (7) de la bande transversale (4), outre le grand nombre de fils (8) à haute résistance, parallèles aux bords longitudinaux de cette bande, comporte un renfort interne (16) en feuilles de polyester revêtues sur une face d'une couche de métal (17) appliquée par vaporisation avec un enrobage par injection de PVC de nuance molle durci par traitement, et en ce que, pour une bande transversale ayant une épaisseur d'environ 3,6mm et une largeur d'environ 12mm, on prévoit pour cette bande environ 8 fils d'armature ayant un indice dtex d'environ 1.100.

2. Tuyau souple selon la revendication 1, caractérisé en ce que la bande transversale (4) est fixée par collage à la gaîne externe.

3. Tuyau souple selon l'une des revendications précédentes, caractérisé en ce que la bande transversale (4), après enrobage des fils d'armature (8) et refroidissement, est enduite avec l'adhésif (5, 20) puis chauffée, pour être ensuite mise en place par enroulement après séchage de l'adhésif (5, 20) et fixée par l'application de la gaîne externe (9) dans une extrudeuse.

Figur 1

Figur 2

Figur 3